# EUROPEAN PATENT APPLICATION

(11) **EP 4 250 196 A1**
(43) Date of publication of application: **27.09.2023**
(21) Application number: 20962436.0
(22) Date of filing: 19.11.2020
(51) Int. Cl.: G06Q 10/04

(54) **PLACEMENT SPECIFICATION PROGRAM, PLACEMENT SPECIFICATION METHOD, AND INFORMATION PROCESSING DEVICE**

(71) Applicant: FUJITSU LIMITED, Kawasaki-shi, Kanagawa 211-8588 (JP)
(72) Inventor: TANIGUCHI, Jun, Kawasaki-shi, Kanagawa 211-8588 (JP); YAMAZAKI, Takashi, Kawasaki-shi, Kanagawa 211-8588 (JP)
(74) Representative: Hoffmann Eitle
(86) International application number: PCT/JP2020/043189
(87) International publication number: WO 2022/107272

(57) **Abstract**

A computer is caused to execute acquisition processing of acquiring a shape of a container that has a first surface and a shape of a plurality of articles and specifying processing of specifying an arrangement position and an arrangement posture in a case where the plurality of articles is arranged in the container in order by using the BL algorithm, and a first solution is acquired by specifying one of a first arrangement posture and a second arrangement posture according to comparison between first gap information in a case where the article is arranged at a BL stability point for the first arrangement posture and second gap information in a case where the article is arranged at a BL stability point for the second arrangement posture, for each of the plurality of articles, a second solution is acquired by specifying one of the first arrangement posture and the second arrangement posture according to comparison between first filling density information in a case where the article is arranged at the BL stability point for the first arrangement posture and second filling density information in a case where the article is arranged at the BL stability point for the second arrangement posture, and an arrangement order and an arrangement posture are specified so that an evaluation result of a predetermined objective function for the first solution and the second solution satisfies a predetermined criterion.

## Description

### FIELD

This case relates to an arrangement specifying program, an arrangement specifying method, and an information processing apparatus.

### BACKGROUND

A technique for searching for optimal arrangement of goods and articles has been disclosed (for example, refer to Patent Documents 1 and 2).

### CITATION LIST

### PATENT DOCUMENT

Patent Document 1: Japanese Laid-open Patent Publication No. 2001-236340
Patent Document 2: Japanese Laid-open Patent Publication No. 2000-305920

### SUMMARY

### [TECHNICAL PROBLEM]

When articles are arranged in a container in order, there is a case where a workload of a worker increases depending on arrangement positions. Alternatively, depending on the arrangement positions, there is a case where a filling density of the articles into the container decreases. Therefore, it is considered to vary the arrangement positions of the articles by rotating the articles or the like. However, in this case, a calculation time used to specify the arrangement increases.

In one aspect, an object of the present invention is to provide an arrangement specifying program, an arrangement specifying method, and an information processing apparatus that can optimize a workload and a filling density while reducing a calculation time.

### [SOLUTION TO PROBLEM]

In one aspect, an arrangement specifying program is an arrangement specifying program that causes a computer to execute processing including acquisition processing of acquiring a shape of a container that has a first surface and a second surface orthogonal to the first surface and a shape of a plurality of articles and specifying processing of specifying an arrangement position and an arrangement posture of each of the plurality of articles in a case where the plurality of articles is arranged in the container in order, by using a bottom left (BL) algorithm, in which in the specifying processing, the computer is caused to execute processing of acquiring first gap information regarding the article and surroundings in a case where the article is arranged at a BL stability point regarding a designated first arrangement posture, for each of the plurality of articles, processing of acquiring second gap information regarding the article and surroundings in a case where the article is arranged at a BL stability point regarding a second arrangement posture obtained by rotating the article within a plane parallel to the first surface, processing of acquiring a first solution by specifying one of the first arrangement posture and the second arrangement posture, according to comparison between the first gap information and the second gap information, processing of acquiring first filling density information of an arranged article in a case where the article is arranged at the BL stability point regarding the first arrangement posture and second filling density information of an arranged article in a case where the article is arranged at the BL stability point regarding the second arrangement posture, processing of acquiring a second solution by specifying one of the first arrangement posture and the second arrangement posture, according to comparison between the first filling density information and the second filling density information, and processing of specifying the arrangement order and the arrangement posture of the plurality of articles, so that an evaluation result of a predetermined objective function regarding the first solution and the second solution satisfies a predetermined criterion.

According to an aspect of the embodiments, an arrangement specifying program for causing a computer to execute processing includes acquisition processing of acquiring a shape of a container that has a first surface and a second surface orthogonal to the first surface and a shape of a plurality of articles; and specifying processing of specifying an arrangement position and an arrangement posture of each of the plurality of articles in a case where the plurality of articles is arranged in the container in order, by using a bottom left (BL) algorithm, wherein in the specifying processing, the computer is caused to execute processing of acquiring first gap information regarding the article and surroundings in a case where the article is arranged at a BL stability point regarding a designated first arrangement posture, for each of the plurality of articles, processing of acquiring second gap information regarding the article and surroundings in a case where the article is arranged at a BL stability point regarding a second arrangement posture obtained by rotating the article within a plane parallel to the first surface, processing of acquiring a first solution by specifying one of the first arrangement posture and the second arrangement posture, according to comparison between the first gap information and the second gap information, processing of acquiring first filling density information of an arranged article in a case where the article is arranged at the BL stability point regarding the first arrangement posture and second filling density information of an arranged article in a case where the article is arranged at the BL stability point regarding the second arrangement posture, processing of acquiring a second solution by specifying one of the first arrangement posture and the second arrangement posture, according to comparison between the first filling density information and the second filling density information, and processing of specifying the arrangement order and the arrangement posture of the plurality of articles, so that an evaluation result of a predetermined objective function regarding the first solution and the second solution satisfies a predetermined criterion.

### [ADVANTAGEOUS EFFECTS OF INVENTION]

It is possible to optimize a workload and a filling density while reducing a calculation time.

### BRIEF DESCRIPTION OF DRAWINGS

FIG. 1 is a diagram illustrating a bottom left algorithm;
FIG. 2 is a diagram illustrating an arrangement example packed using the bottom left algorithm;
FIGs. 3A and 3B are diagrams illustrating results of evaluating a packing work;
FIG. 4 is a diagram illustrating a relationship between the number of combinations of products and a calculation time;
FIG. 5A is a functional block diagram illustrating an overall configuration of an information processing apparatus, and FIG. 5B is a block diagram illustrating a hardware configuration of each unit of the information processing apparatus other than a display device;
FIG. 6A is a diagram illustrating a model of a packaging box, and FIG. 6B is a diagram illustrating product information stored in a product information storage unit;
FIG. 7 is a flowchart illustrating an example of processing in a case where arrangement of each product is specified;
FIG. 8 is a diagram illustrating a case where three products 1 to 3 have been already arranged in the packaging box;
FIG. 9 is a diagram illustrating a case where the three products 1 to 3 have been already arranged in the packaging box;
FIG. 10 is a flowchart illustrating another example of the processing in a case where arrangement of each product is specified;
FIG. 11 is a flowchart illustrating an example of processing in a case where an arrangement order is changed if an evaluation criterion is not satisfied;
FIG. 12 is a diagram illustrating a determination result by a determination unit;
FIG. 13 is a diagram illustrating a relationship between the number of products to be arranged and the number of combinations of the arrangements; and
FIGs. 14A and 14B are diagrams illustrating other definitions of gaps.

### DESCRIPTION OF EMBODIMENTS

In a product line in a factory or in-house logistics, a packaging work for packing articles such as products into containers such as packaging boxes is performed. Completing the packing work in a short time has an advantage of reducing labor costs. On the other hand, if packaging material costs can be reduced by a highly difficult packaging work, this results in reducing transportation costs. Alternatively, it is possible to achieve both by packing the articles in packaging boxes with an appropriate size.

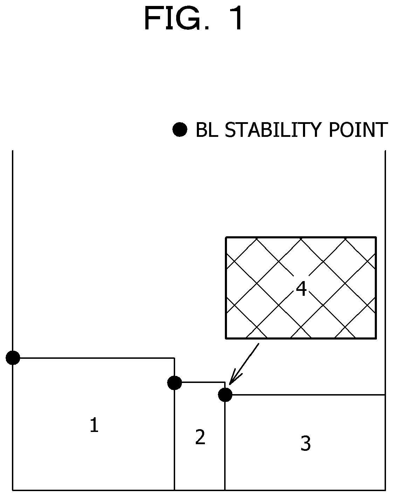

Optimal arrangement of the products in the packaging boxes can be solved, for example, using the bottom left algorithm. The bottom left (BL) algorithm is a method for arranging figures into an empty packaging box one by one in order from the first order given to the figure. FIG. 1 is a diagram illustrating the bottom left algorithm. As illustrated in FIG. 1, at the time when it is attempted to arrange the figure, BL stability point candidates of an arrangement point that includes the arranged figure and that cannot be moved downward (front side as viewing packaging box from worker) and leftward (left as viewing packaging box from worker) are exemplified. In a case where there is the plurality of candidates, the lowest BL stability point where the arrangement is possible among the candidates is adopted, and in a case where there is the same candidate with the lowest BL stability points, the leftmost BL stability point is further adopted. In this way, by repeating the search for the BL stability point and the arrangement determination, it is possible to arrange the products in the packaging box while reducing a gap. In a case where the bottom left algorithm is adopted, the packaging box is arranged in front of the worker and on the left side of the worker. On the other hand, by switching algorithm determination criteria in a reflectional symmetry manner and arranging the packaging box on the right side as viewed from the worker, it is possible to switch the left and the right of the arrangement. In the present specification, a method for specifying an arrangement order of a plurality of articles using the bottom left algorithm is disclosed. However, the term, the bottom left algorithm, in the present specification does not exclude an idea of bottom right and does not similarly exclude ideas of top left and top right.

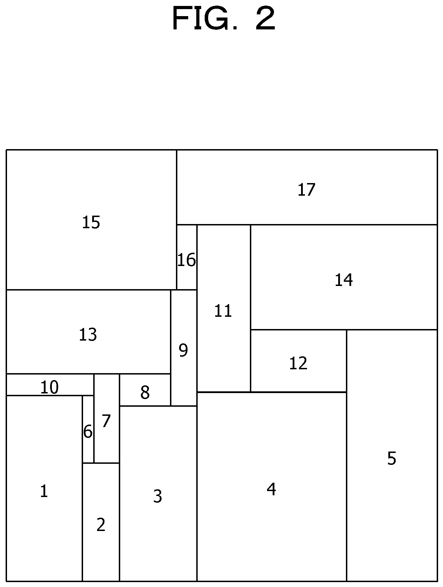

FIG. 2 is a diagram illustrating an arrangement example packed using the bottom left algorithm. A number in FIG. 2 indicates an arrangement order into a packaging box. In this way, it is possible to arrange each product while reducing the gap. However, as a cram degree (filling density) in the packaging box is higher (as gap at the time of arrangement is narrower), an arrangement work becomes more complicated, and a manual work burden increases. In this case, productivity decreases.

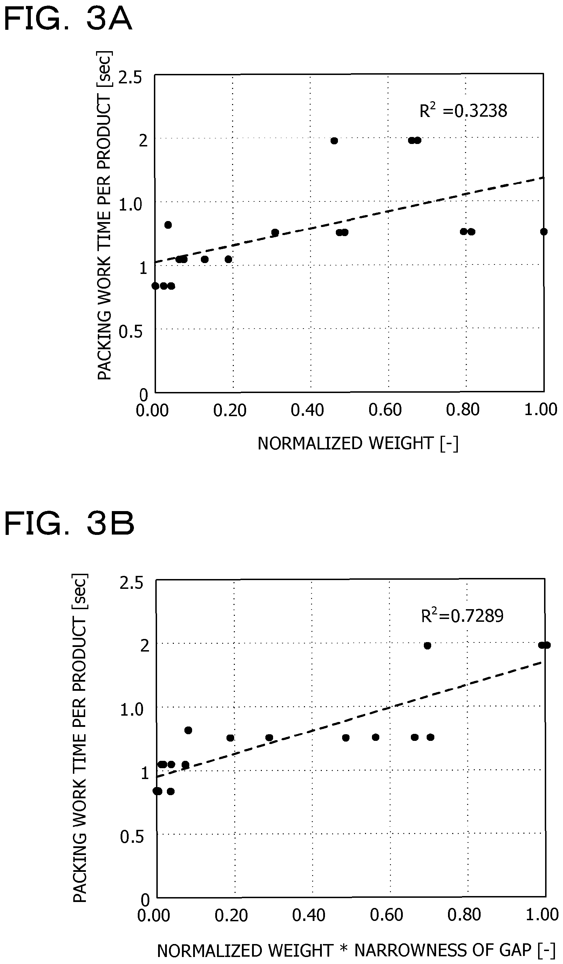

A typical method of an assembly man-hour evaluation method is the Work Factor method. Results obtained by evaluating a packing work using a method based on this method are illustrated in FIGs. 3A and 3B. As illustrated in FIG. 3A, there is a weak correlation between a product weight and a workload (time). A tendency is recognized such that the heavier the product, the longer the work time. On the other hand, as illustrated in FIG. 3B, there is a strong correlation between a weight considering narrowness of a gap used to arrange the product and the workload. Therefore, it is found that the workload relates to not only the weight but also the gap at the time of arrangement. Specifically, as the weight of the product increases, the work time becomes longer (workload increases), and as the gap at the time of arrangement becomes narrower, the work time becomes longer (workload increases). Therefore, in order to reduce the workload, it is desired to consider increasing the gap used to arrange the products.

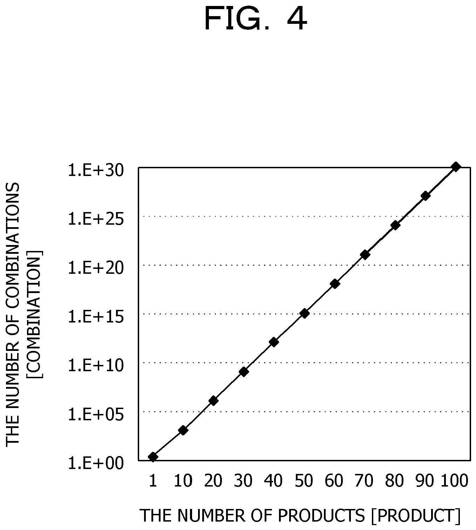

Therefore, it is considered to arrange the products as rotating the products within a plane parallel to a bottom surface of the packaging box when the products are arranged in the packaging box. In a case where the product has a substantially rectangular parallelepiped shape or in a case where the product has a plate-like shape having a substantially rectangular shape in a planer view, lengths differ according to a direction. Therefore, a gap from an inner wall of the packaging box can be changed. If the gap can be widened, this reduces the workload. In this way, by increasing a degree of freedom of a product arrangement work, it is possible to reduce the workload. However, since a plurality of arrangements can be used for one product, if the number of products increases, the number of combinations of product arrangement positions increases as illustrated in FIG. 4. In this case, the calculation time increases.

In the following embodiments, an arrangement specifying program, an arrangement specifying method, and an information processing apparatus will be described that can optimize a workload and a filling density while reducing a calculation time by incorporating a gap when a product is arranged in a packaging box and the filling density into an arrangement algorithm.

### [First Embodiment]

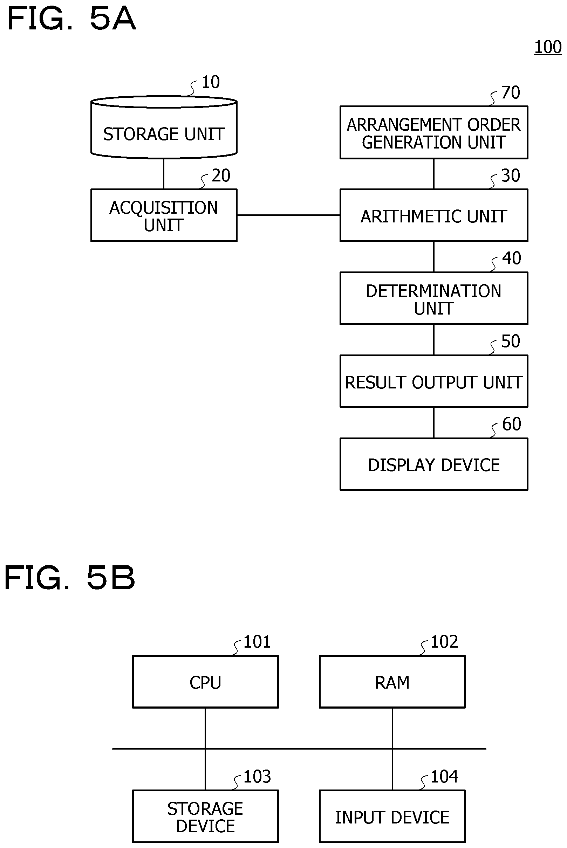

FIG. 5A is a functional block diagram illustrating an overall configuration of an information processing apparatus 100. The information processing apparatus 100 is a server for optimization processing or the like. As illustrated in FIG. 5A, the information processing apparatus 100 includes a storage unit 10, an acquisition unit 20, an arithmetic unit 30, a determination unit 40, a result output unit 50, a display device 60, an arrangement order generation unit 70, or the like. The display device 60 is a device that displays a processing result of the information processing apparatus 100 or the like and is a display or the like.

FIG. 5B is a block diagram illustrating a hardware configuration of each unit other than the display device 60 of the information processing apparatus 100. As illustrated in FIG. 5B, the information processing apparatus 100 includes a CPU 101, a RAM 102, a storage device 103, an input device 104, or the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, or the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arrangement specifying program. The input device 104 is an input device such as a mouse or a keyboard. Alternatively, the input device 104 is an interface such as an external memory such as a USB memory. The CPU 101 executes the arrangement specifying program so that each unit other than the display device 60 of the information processing apparatus 100 is implemented. Note that, as each unit other than the display device 60 of the information processing apparatus 100, hardware such as a dedicated circuit may be used.

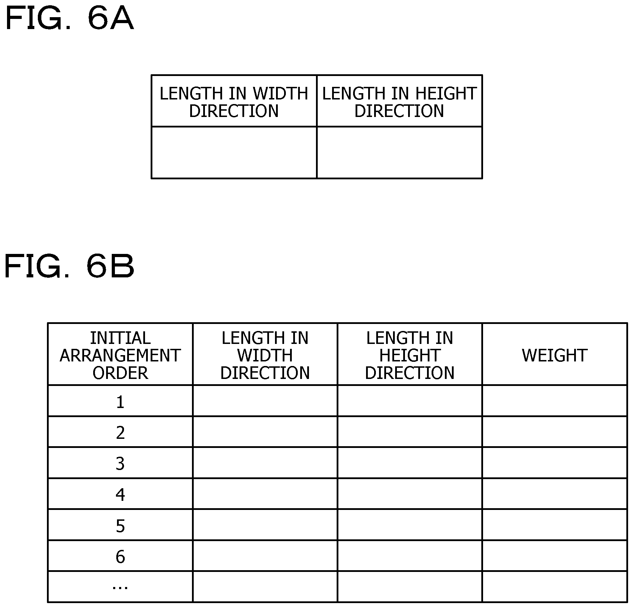

The storage unit 10 stores a model of a packaging box. FIG. 6A is a diagram illustrating the model of the packaging box. As illustrated in FIG. 6A, the storage unit 10 stores a shape of a bottom surface (length in width direction * length in height direction) of the packaging box. A worker faces any one side of the bottom surface of the packaging box when facing the packaging box. The width direction of the packaging box indicates a direction in which the one side that the worker is facing extends. The height direction of the packaging box indicates a direction in which adjacent sides perpendicular to the one side that the worker is facing extend and is a direction to be separated from the worker (depth direction). In the following, a side closer to the worker in the height direction is defined as a "lower side", a left side in the width direction in a case where the worker views the packaging box is defined as a "left side", and a right side is defined as a "right side". The model of the packaging box is stored in the storage unit 10 via the input device 104 or the like.

Furthermore, the storage unit 10 stores information regarding products to be arranged in the packaging box in order. FIG. 6B is a diagram illustrating product information stored in the storage unit 10. Each product is substantially hexahedral. As illustrated in FIG. 6B, each product is denoted with a number representing an order to be arranged in the packaging box (initial arrangement order), and in addition, a shape of the product (length in width direction * length in height direction) is associated with a weight. By referring to the shape of each product, it is possible to recognize which surface of each product is caused to face the bottom surface of the packaging box.

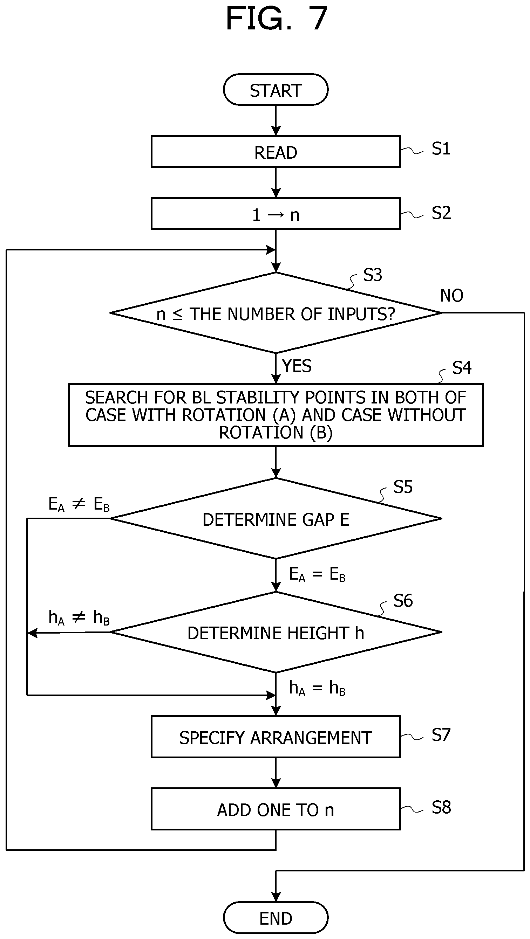

FIG. 7 is a flowchart illustrating an example of processing in a case where arrangement of each product is specified, using the packaging box model and the product information stored in the storage unit 10. As illustrated in FIG. 7, first, the acquisition unit 20 reads the packaging box model and the product information stored in the storage unit 10 (step S1). Next, the arithmetic unit 30 substitutes one for a variable n (step S2). The variable n is a variable used to count the number of products that have been arranged in the packaging box.

Next, the arithmetic unit 30 determines whether or not the variable n is equal to or less than the number of arrangements (step S3). The number of arrangements is the number of all the products arranged in the packaging box. By executing step S3, it can be determined whether or not the arrangement of all the products in the packaging box has been specified.

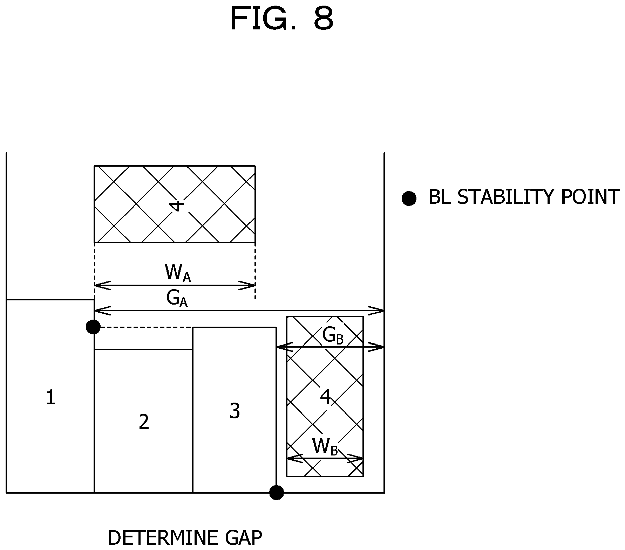

If it is determined in step S3 as "Yes", the arithmetic unit 30 searches for BL stability points in both of a case with rotation A and a case without rotation B, for an n-th product, in a state where an n-1-th product is arranged in the packaging box (step S4). In a case of the variable n = 1, the BL stability point is at a lower left corner of the packaging box. FIG. 8 is a diagram illustrating a case where three products 1 to 3 have been already arranged in the packaging box. In the example in FIG. 8, there are two BL stability points. A case without rotation B is a case where the width direction of the product is set to be parallel to the width direction of the packaging box and the height direction of the product is set to be parallel to the height direction of the packaging box when the product is arranged in the packaging box. A case with rotation A is a case where the width direction of the product is set to be parallel to the height direction of the packaging box and the height direction of the product is set to be parallel to the width direction of the packaging box when the product is arranged in the packaging box. In other words, a case with rotation A is a case where the direction of the product stored in the storage unit 10 is rotated by 90 degrees within a plane parallel to the bottom surface of the packaging box.

Next, the arithmetic unit 30 determines a gap ratio E (step S5). A gap ratio E_{A} in a case with rotation A is defined by W_{A}/G_{A}. A gap ratio E_{B} in a case without rotation B is defined by W_{B}/G_{B}. A width W_{A} indicates a length in the width direction of the product in a case with rotation A and is a length in the height direction stored in the storage unit 10. A width W_{B} indicates a length in the width direction of the product in a case without rotation B and is a length in the width direction stored in the storage unit 10. A gap G_{A} indicates a distance from the BL stability point to a side on a right side of the packaging box in a case where the product is arranged at the BL stability point in a case with rotation A. A gap G_{B} indicates a distance from the BL stability point to the side on the right side of the packaging box in a case where the product is arranged at the BL stability point in a case without rotation B.

In a case where it is determined E_{A} ≠ E_{B} in step S5, the arithmetic unit 30 specifies arrangement of the product (step S7). In this case, the arithmetic unit 30 adopts arrangement that is a smaller one of E_{A} and E_{B}. By adopting the smaller arrangement, arrangement with a larger margin of the gap can be adopted for a product to be arranged. In other words, arrangement that can reduce the workload can be adopted.

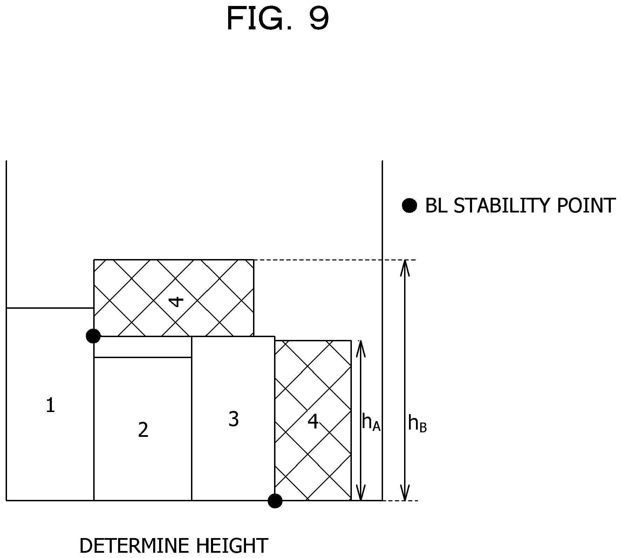

In a case where it is determined E_{A} = E_{B} in step S5, the arithmetic unit 30 determines a height h (step S6). FIG. 9 is a diagram illustrating a case where the products 1 to 3 have been already arranged in the packaging box. As illustrated in FIG. 9, a height h_{A} indicates a distance from a side on a lower side of the packaging box to a side, which is the closest to a side on an upper side of the packaging box, among the sides of the product in a case with rotation A. A height h_{B} indicates a distance from the side on the lower side of the packaging box to the side that is the closest to the side on the upper side of the packaging box among the sides of the product in a case without rotation B. In a case where step S6 is executed, a smaller one of the heights h_{A} and h_{B} is adopted in step S7. By adopting the smaller height, it is possible to suppress a height of a shape configured by all the arranged products (reduce height). Therefore, it is possible to increase the filling density of the products to the packaging box.

After executing step S7, the arithmetic unit 30 adds one to the variable n (step S8). Thereafter, the processing from step S3 is executed again. In a case where it is determined in step S3 as "No", the arrangement of all the products in the packaging box is specified. Therefore, the execution of the flowchart ends. In this case, the result output unit 50 outputs a specified product arrangement layout to the display device 60. The display device 60 displays the specified product arrangement layout.

According to the processing illustrated in FIG. 7, when the product arrangement layout is specified, both of the workload and the filling density can be considered while prioritizing workability. Furthermore, while an arrangement angle in a case where each product is arranged is specified as a case with rotation A or a case without rotation B, arrangement of a next product is specified. Therefore, it is possible to shorten a calculation time.

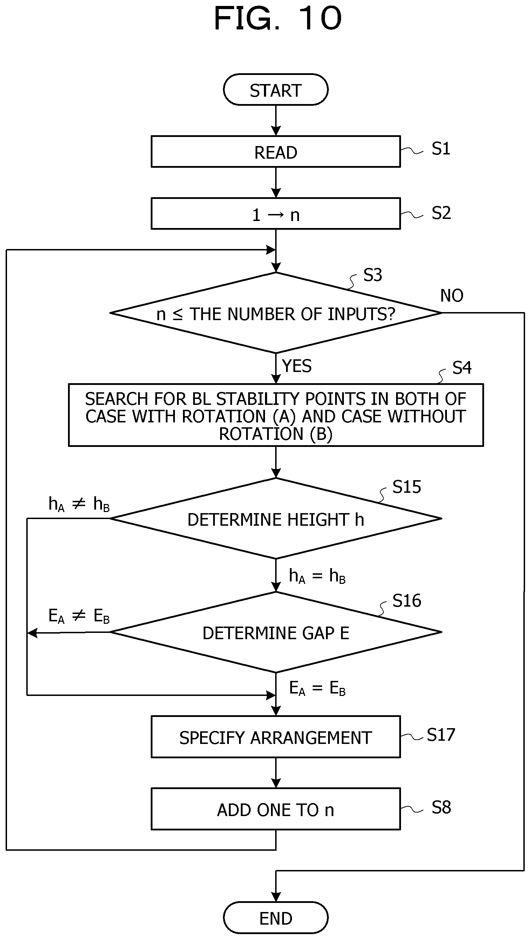

FIG. 10 is a flowchart illustrating another example of the processing in a case where arrangement of each product is specified. Steps S1 to S4 are similar to those in the flowchart in FIG. 7. After executing step S4, the arithmetic unit 30 determines the height h first (step S15). In a case where it is determined the height h_{A} ≠ the height h_{B}, the arithmetic unit 30 specifies the arrangement of the product (step S17). In this case, the arithmetic unit 30 adopts a smaller one of the height h_{A} and the height h_{B}.

In a case where it is determined in step S15 that the height h_{A} = the height h_{B}, the arithmetic unit 30 determines the gap ratio E (step S16). In a case where step S16 is executed, a smaller one of the gap ratios E_{A} and E_{B} is adopted in step S17.

After executing step S17, the arithmetic unit 30 adds one to the variable n (step S8). Thereafter, the processing from step S3 is executed again. In a case where it is determined in step S3 as "No", the arrangement of all the products in the packaging box is specified. Therefore, the execution of the flowchart ends. In this case, the result output unit 50 outputs a specified product arrangement layout to the display device 60. The display device 60 displays the specified product arrangement layout.

According to the processing illustrated in FIG. 10, when the product arrangement layout is specified, both of the workload and the filling density can be considered while prioritizing the filling density. Furthermore, while an arrangement angle in a case where each product is arranged is specified as a case with rotation A or a case without rotation B, arrangement of a next product is specified. Therefore, it is possible to shorten a calculation time.

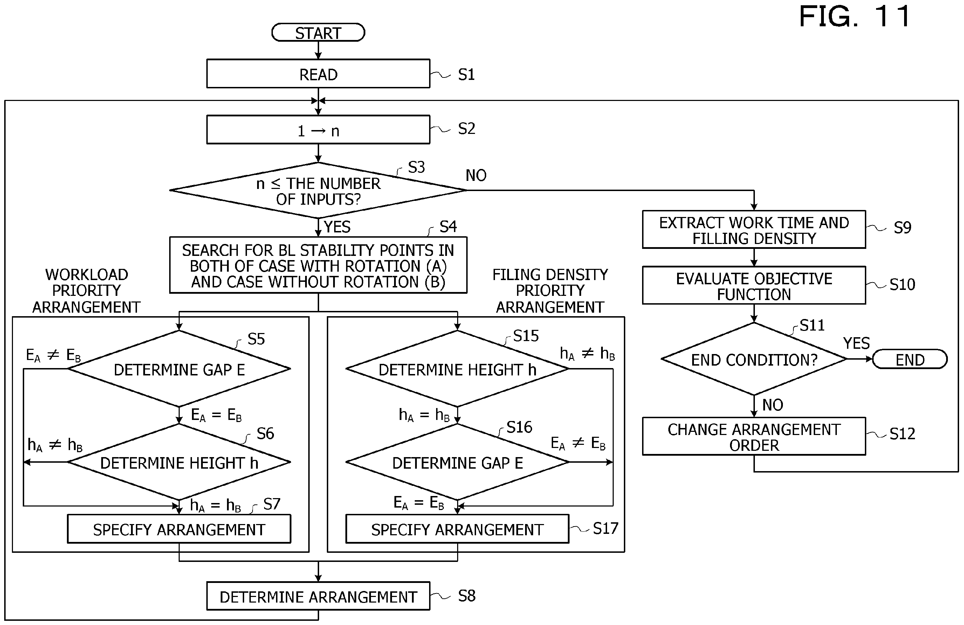

FIG. 11 is a flowchart illustrating an example of processing in a case where an arithmetic result regarding the initial arrangement order stored in the storage unit 10 is evaluated and an arrangement order is changed if an evaluation criterion is not satisfied. As illustrated in FIG. 11, steps S1 to S4 are similar to those in the flowchart in FIG. 7. After executing step S4, both of processing in steps S5 to S7 in FIG. 7 and steps S15 to S17 in FIG. 10 are executed in parallel. For the arrangement specified by executing steps S5 to S7 in FIG. 7, steps S5 to S7 in FIG. 7 are executed even in a case where the variable n is incremented by one. For the arrangement specified by executing steps S15 to S17 in FIG. 10, steps S15 to S17 in FIG. 10 are executed even in a case where the variable n is incremented by one. As a result, the arrangement that prioritizes the workload and the arrangement that prioritizes the filling density are sequentially specified in parallel. By sequentially specifying the arrangement that prioritizes the workload, a product arrangement layout with workload priority arrangement can be specified. By sequentially specifying the arrangement that prioritizes the filling density, a product arrangement layout with filling density priority arrangement can be specified.

In a case where it is determined in step S3 as "No", the determination unit 40 extracts a filling density for each of the product arrangement layout with the workload priority arrangement and the product arrangement layout with the filling density priority arrangement. As the filling density, for example, a packing height can be extracted. The packing height is a height of a shape configured by all the products that have been arranged. Furthermore, the determination unit 40 extracts a work time for both of the product arrangement layout with the workload priority arrangement and the product arrangement layout with the filling density priority arrangement, by inputting both layouts into a work model (step S9). In this case, using a work model evaluation method such as the Work Factor method or the Methods-Time Measurement (MTM) method, it is possible to calculate the work time based on the weight of the product, the arrangement position of the product, an evaluation value of the gap, or the like.

Next, the determination unit 40 performs evaluation using the work time and the filling density as objective functions (step S10). For example, the determination unit 40 evaluates whether or not an evaluation function used to evaluate the objective function satisfies a prescribed value, whether or not the number of evolutionary generations of the genetic algorithm exceeds a threshold, whether or not the total number of individuals for which calculation has been performed (the number of specified product arrangement layout) exceeds a threshold, or the like.

Next, the determination unit 40 determines whether or not the evaluation result in step S10 satisfies an end condition (step S11). In a case where it is determined as "Yes" in step S11, the execution of the flowchart ends. In this case, the obtained arrangement order and the specified product arrangement layout are displayed by the display device 60.

In a case where it is determined in step S11 as "No", the arrangement order generation unit 70 generates a new arrangement order by rearranging the arrangement order by crossover, mutation, or the like of the genetic algorithm (step S12). Thereafter, the processing from step S2 is executed again on the new arrangement order.

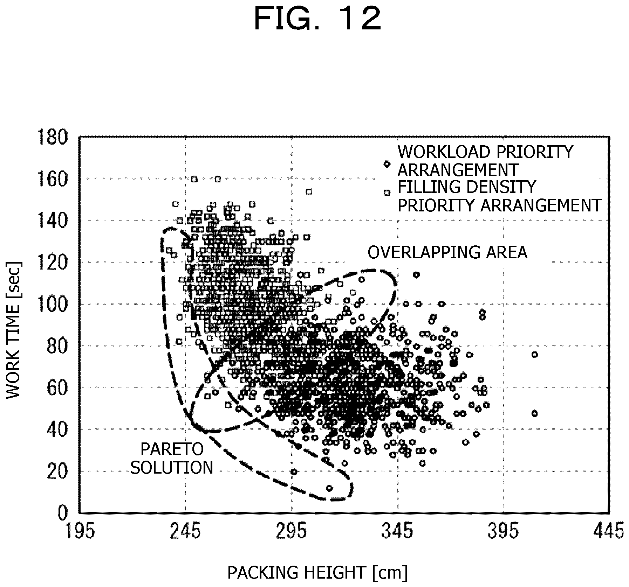

FIG. 12 is a diagram illustrating a determination result by the determination unit 40. Each plot in FIG. 12 indicates an evaluation result for each arrangement order. A point (near center of graph) where a result group of the workload priority arrangement and a result group of the filling density priority arrangement overlap can be planed as an input plan that shortens the work time and lowers the height. The point where the overlapped solution group and a Pareto solution group are overlapped can be determined as a good solution on average. Normalization or standardization is performed on the objective function with a different dimension from the packing height [cm] and the work time [sec], and an optimal solution can be output without weighting each priority arrangement. These optimal solutions are displayed on the display device 60.

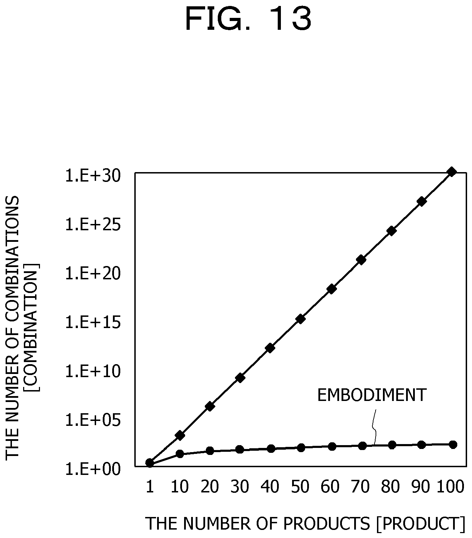

FIG. 13 is a diagram illustrating a relationship between the number of products to be arranged and the number of combinations of the arrangements. In a case where there are two arrangements for one product, the number of combinations is (n!)² × 2ⁿ. On the other hand, in the present embodiment, since one of the arrangement positions for one product is specified, the number of combinations is 2n × (n!)². In this way, according to the present embodiment, the number of combinations can be reduced. Therefore, the calculation time can be shortened.

In each example described above, when the gap is determined, the gap in the width direction is focused. However, the gap in the height direction may be focused. When the gap ratio E is determined in step S5 in FIG. 7 and step S15 in FIG. 10, the gap in the width direction and the gap in the height direction may be determined.

A gap ratio E_{A1} in a case with rotation A is defined by W_{A1}/G_{A1}. A gap ratio E_{A2} in a case with rotation A is defined by h_{A1}/G_{A2}. A gap ratio E_{B1} in a case without rotation B is defined by W_{B1}/G_{B1}. A gap ratio E_{B2} in a case without rotation B is defined by h_{B1}/G_{B2}.

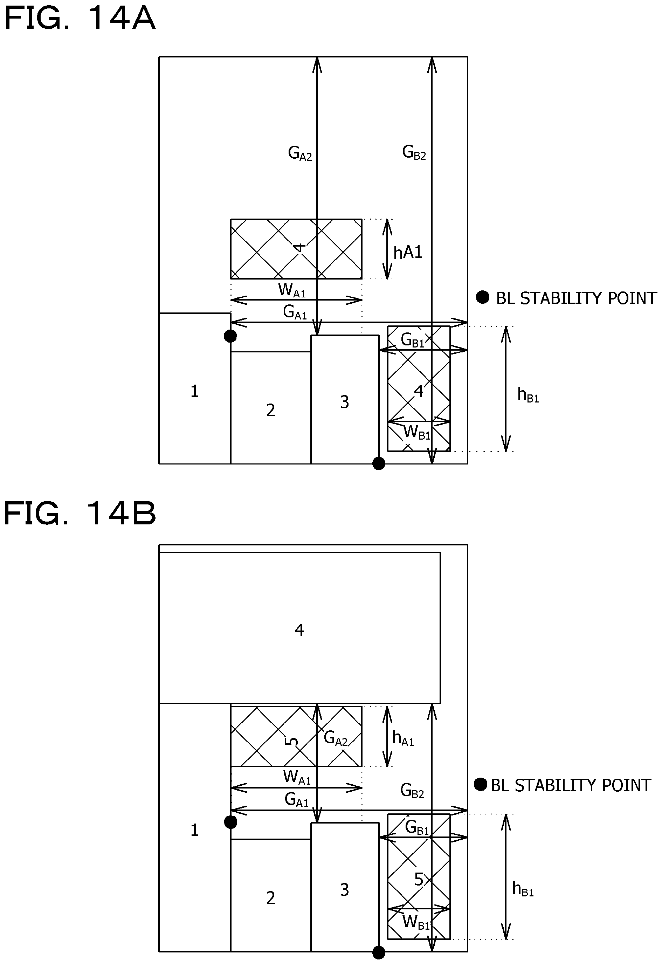

As illustrated in FIGs. 14A and 14B, the width W_{A1} indicates a length in the width direction of the product in a case with rotation A and indicates a length in the height direction stored in the storage unit 10. The height h_{A1} indicates a length in the height direction of the product in a case with rotation A and indicates a length in the width direction stored in the storage unit 10. The width W_{B1} indicates a length in the width direction of the product in a case without rotation B and indicates the length in the width direction stored in the storage unit 10. The height h_{B1} indicates a length in the height direction of the product in a case without rotation B and indicates the length in the height direction stored in the storage unit 10.

The gap G_{A1} indicates a distance from the BL stability point to a side on a right side of the packaging box in a case where the product is arranged at the BL stability point in a case with rotation A. The gap G_{A2} indicates a gap from the lowermost side of the product in the height direction, in a case where the product is arranged at the BL stability point in a case with rotation A. In FIG. 14A, the gap indicates a gap to the side on the upper side of the packaging box. In FIG. 14B, the gap indicates a gap to a product arranged on the upper side.

The gap G_{B1} indicates a distance from the BL stability point to the side on the right side of the packaging box in a case where the product is arranged at the BL stability point in a case without rotation B. The gap G_{B2} indicates a gap from the lowermost side of the product in the height direction, in a case where the product is arranged at the BL stability point in a case without rotation B. In FIG. 14A, the gap indicates a gap to the side on the upper side of the packaging box. In FIG. 14B, the gap indicates a gap to a product arranged on the upper side.

The arithmetic unit 30 adopts a larger one of E_{A1} and E_{A2}. Furthermore, the arithmetic unit 30 adopts a larger one of E_{B1} and E_{B2}. Next, the arithmetic unit 30 determines whether or not E_{An} and E_{Bm} are equal to each other. Here, "n" and "m" are adopted numbers of one and two, respectively. In steps S7 and S17, the arithmetic unit 30 adopts a smaller one of E_{An} and E_{Bm}.

In each example described above, a ratio of the length of the product with respect to the gap at the time when the product is arranged is used. However, the present invention is not limited to this. For example, a gap from the product to one side of the packaging box or from the product to another product in a case where the arrangement of the product has been completed may be used. In this way, in a case where the product is rotated, the gap in a case where the arrangement of the product has been completed may be focused.

In each example described above, the packaging box is an example of a container that has a first surface and a second surface orthogonal to the first surface, and the first surface is an example of the bottom surface of the packaging box. The plurality of products is an example of articles to be arranged in the container in order. An arrangement posture with the length in the width direction and with the length in the height direction stored as the product information is an example of a first arrangement posture. The arrangement posture in a case with rotation A is an example of a second arrangement posture. The gap ratios E_{A}, E_{A1}, and E_{A2} are examples of first gap information. The gap ratios E_{B}, E_{B1}, and E_{B2} are examples of second gap information. The product arrangement layout with the workload priority arrangement is an example of a first solution. The height h_{A} is an example of first filling density information. The height h_{B} is an example of second filling density information. The product arrangement layout with the filling density priority arrangement is an example of a second solution. The acquisition unit 20 is an example of an acquisition unit that acquires a shape of the container that has the first surface and the second surface orthogonal to the first surface and shapes of a plurality of articles. The arithmetic unit 30, the determination unit 40, and the arrangement order generation unit 70 are examples of a specifying unit that is a specifying unit that specifies an arrangement position and an arrangement posture of each of the plurality of articles in a case where the plurality of articles is arranged in the container in order, by using a bottom left (BL) algorithm, and acquires first gap information regarding the article and surroundings in a case where the article is arranged at a BL stability point regarding a designated first arrangement posture, for each of the plurality of articles, acquires second gap information regarding the article and surroundings in a case where the article is arranged at a BL stability point regarding a second arrangement posture obtained by rotating the article within a plane parallel to the first surface, acquires a first solution by specifying the first arrangement posture and the second arrangement posture, according to comparison between the first gap information and the second gap information, acquires first filling density information of an arranged article in a case where the article is arranged at the BL stability point regarding the first arrangement posture and second filling density information of an arranged article in a case where the article is arranged at the BL stability point regarding the second arrangement posture, acquires a second solution by specifying one of the first arrangement posture and the second arrangement posture, according to comparison between the first filling density information and the second filling density information, and specifies the arrangement order and the arrangement posture of the plurality of articles, so that an evaluation result of a predetermined objective function regarding the first solution and the second solution satisfies a predetermined criterion.

While the embodiments of the present invention have been described above in detail, the present invention is not limited to such specific embodiments, and various modifications and alterations may be made within the scope of the present invention described in the claims.

### REFERENCE SIGNS LIST

10storage unit
20acquisition unit
30arithmetic unit
40determination unit
50result output unit
60display device
70arrangement order generation unit
100 information processing apparatus

## Claims

1. An arrangement specifying program for causing a computer to execute processing comprising:
acquisition processing of acquiring a shape of a container that has a first surface and a second surface orthogonal to the first surface and a shape of a plurality of articles; and
specifying processing of specifying an arrangement position and an arrangement posture of each of the plurality of articles in a case where the plurality of articles is arranged in the container in order, by using a bottom left (BL) algorithm, wherein
in the specifying processing, the computer is caused to execute
processing of acquiring first gap information regarding the article and surroundings in a case where the article is arranged at a BL stability point regarding a designated first arrangement posture, for each of the plurality of articles,
processing of acquiring second gap information regarding the article and surroundings in a case where the article is arranged at a BL stability point regarding a second arrangement posture obtained by rotating the article within a plane parallel to the first surface,
processing of acquiring a first solution by specifying one of the first arrangement posture and the second arrangement posture, according to comparison between the first gap information and the second gap information,
processing of acquiring first filling density information of an arranged article in a case where the article is arranged at the BL stability point regarding the first arrangement posture and second filling density information of an arranged article in a case where the article is arranged at the BL stability point regarding the second arrangement posture,
processing of acquiring a second solution by specifying one of the first arrangement posture and the second arrangement posture, according to comparison between the first filling density information and the second filling density information, and
processing of specifying the arrangement order and the arrangement posture of the plurality of articles, so that an evaluation result of a predetermined objective function regarding the first solution and the second solution satisfies a predetermined criterion.

2. The arrangement specifying program according to claim 1, wherein the first gap information and the second gap information are ratios between a gap between an article and surroundings in a case where the article is arranged and a length of the article in a direction from the article toward the surroundings.

3. The arrangement specifying program according to claim 1 or 2, wherein the surroundings of the article in a case where the article is arranged is the second surface or an arranged article.

4. The arrangement specifying program according to any one of claims 1 to 3, wherein the first filling density information and the second filling density information are a distance from a bottom of the bottom left algorithm to an end of an article on a side opposite to the bottom, in a case where the article is arranged.

5. The arrangement specifying program according to any one of claims 1 to 4, wherein the predetermined objective function includes a work time for an arrangement work of the arrangement order of the first solution and the second solution and a filling density of the plurality of articles arranged in arrangement orders of the first solution and the second solution.

6. The arrangement specifying program according to any one of claims 1 to 5, wherein
the first surface has a substantially rectangular shape, and
the plurality of articles has a substantially rectangular shape in a planer view of the first surface in a case where the articles are arranged in the container.

7. The arrangement specifying program according to any one of claims 1 to 6, wherein a genetic algorithm is used for the specifying processing.

8. An arrangement specifying method executed by a computer, the arrangement specifying method comprising:
acquisition processing of acquiring a shape of a container that has a first surface and a second surface orthogonal to the first surface and a shape of a plurality of articles; and
specifying processing of specifying an arrangement position and an arrangement posture of each of the plurality of articles in a case where the plurality of articles is arranged in the container in order, by using a bottom left (BL) algorithm, wherein
in the specifying processing, the computer is caused to execute
processing of acquiring first gap information regarding the article and surroundings in a case where the article is arranged at a BL stability point regarding a designated first arrangement posture, for each of the plurality of articles,
processing of acquiring second gap information regarding the article and surroundings in a case where the article is arranged at a BL stability point regarding a second arrangement posture obtained by rotating the article within a plane parallel to the first surface,
processing of acquiring a first solution by specifying one of the first arrangement posture and the second arrangement posture, according to comparison between the first gap information and the second gap information,
processing of acquiring first filling density information of an arranged article in a case where the article is arranged at the BL stability point regarding the first arrangement posture and second filling density information of an arranged article in a case where the article is arranged at the BL stability point regarding the second arrangement posture,
processing of acquiring a second solution by specifying one of the first arrangement posture and the second arrangement posture, according to comparison between the first filling density information and the second filling density information, and
processing of specifying the arrangement order and the arrangement posture of the plurality of articles, so that an evaluation result of a predetermined objective function regarding the first solution and the second solution satisfies a predetermined criterion.

9. The arrangement specifying method according to claim 8, wherein the first gap information and the second gap information are ratios between a gap between an article and surroundings in a case where the article is arranged and a length of the article in a direction from the article toward the surroundings.

10. The arrangement specifying method according to claim 8 or 9, wherein the surroundings of the article in a case where the article is arranged is the second surface or an arranged article.

11. The arrangement specifying method according to any one of claims 8 to 10, wherein the first filling density information and the second filling density information are a distance from a bottom of the bottom left algorithm to an end of an article on a side opposite to the bottom, in a case where the article is arranged.

12. The arrangement specifying method according to any one of claims 8 to 11, wherein the predetermined objective function includes a work time for an arrangement work of the arrangement order of the first solution and the second solution and a filling density of the plurality of articles arranged in arrangement orders of the first solution and the second solution.

13. The arrangement specifying method according to any one of claims 8 to 12, wherein
the first surface has a substantially rectangular shape, and
the plurality of articles has a substantially rectangular shape in a planer view of the first surface in a case where the articles are arranged in the container.

14. The arrangement specifying method according to any one of claims 8 to 13, wherein a genetic algorithm is used for the specifying processing.

15. An information processing apparatus comprising:
an acquisition unit configured to acquire a shape of a container that has a first surface and a second surface orthogonal to the first surface and a shape of a plurality of articles; and
a specifying unit configured to specify an arrangement position and an arrangement posture of each of the plurality of articles in a case where the plurality of articles is arranged in the container in order, by using a bottom left (BL) algorithm, wherein
the specifying unit acquires first gap information regarding the article and surroundings in a case where the article is arranged at a BL stability point regarding a designated first arrangement posture, for each of the plurality of articles, acquires second gap information regarding the article and surroundings in a case where the article is arranged at a BL stability point regarding a second arrangement posture obtained by rotating the article within a plane parallel to the first surface, acquires a first solution by specifying one of the first arrangement posture and the second arrangement posture, according to comparison between the first gap information and the second gap information, acquires first filling density information of an arranged article in a case where the article is arranged at the BL stability point regarding the first arrangement posture and second filling density information of an arranged article in a case where the article is arranged at the BL stability point regarding the second arrangement posture, acquires a second solution by specifying one of the first arrangement posture and the second arrangement posture, according to comparison between the first filling density information and the second filling density information, and specifies the arrangement order and the arrangement posture of the plurality of articles, so that an evaluation result of a predetermined objective function regarding the first solution and the second solution satisfies a predetermined criterion.

16. The information processing apparatus according to claim 15, wherein the first gap information and the second gap information are ratios between a gap between an article and surroundings in a case where the article is arranged and a length of the article in a direction from the article toward the surroundings.

17. The information processing apparatus according to claim 15 or 16, wherein the surroundings of the article in a case where the article is arranged is the second surface or an arranged article.

18. The information processing apparatus according to any one of claims 15 to 17, wherein the first filling density information and the second filling density information are a distance from a bottom of the bottom left algorithm to an end of an article on a side opposite to the bottom, in a case where the article is arranged.

19. The information processing apparatus according to any one of claims 15 to 18, wherein the predetermined objective function includes a work time for an arrangement work of the arrangement order of the first solution and the second solution and a filling density of the plurality of articles arranged in arrangement orders of the first solution and the second solution.

20. The information processing apparatus according to any one of claims 15 to 19, wherein
the first surface has a substantially rectangular shape, and
the plurality of articles has a substantially rectangular shape in a planer view of the first surface in a case where the articles are arranged in the container.
